# EUROPEAN PATENT APPLICATION

(11) **EP 1 249 765 A1**
(43) Date of publication of application: **16.10.2002**
(21) Application number: 01440105.3
(22) Date of filing: 12.04.2001
(51) Int. Cl.: G06F 17/30

(54) **Personalized service**

(71) Applicant: ALCATEL, 75008 Paris (FR)
(72) Inventor: Bauwens, Bart, 1930 Zaventem (BE); Broos, Rudi, 2910 Essen (BE); Siebelink, Ruud, 2600 Antwerpen (BE)
(74) Representative: Urlichs, Stefan, Dipl.-Phys.

(57) **Abstract**

A method of performing an computer-controlled service (21) includes providing in the form of a markup language document (XML_IN; XML) a service (21) comprising service content (212), service presentation (213) and service behavior (211). Before the document (XML_IN; XML) is executed by a program module called markup language processor, at least one user parameter (PAR; 23) is determined from a user profile, a user input and/or current network characteristics. Then the service behavior (211) is adapted based on the user parameter (PAR; 23) by transforming the markup language document (XML_IN; XML) using a behavior stylesheet (STY; 22). After transformation, the markup language document (XML_OUT) is executed

## Description

### Field of the Invention

The invention relates to telecom services and, more specifically, to personalization of telecom services, particularly to services in the Internet.

### Background of the Invention

In the field of telecommunications, computer-controlled services become more and more important. Such services include for example Web pages in the Internet. A Web page can be written in a markup language like HTML (hypertext markup language). The Web page provides a certain service to a user like retrieval of information, online shopping, online banking, display of stock prices, presentation of news and the like. Normally, to get a certain service, the user must navigate through a number of menu pages. Other services may also include for example computer-controlled call centers where the user also has to navigate through certain dialogs by entering DTMF signals (Dual Tone Multi Frequency) or by saying simple terms like "Yes" and "No".

A markup language that may be used to provide computer-controlled services is XML. Extensible Markup Language, abbreviated XML, describes a class of data objects called XML documents and partially describes the behavior of computer programs which process them. XML is an application profile or restricted form of SGML, the Standard Generalized Markup Language. Moreover, XML is a follow-up standard of SGML taking into account the requirements of the Web and at the same time simplifying some of SGML complex concepts. A software module called an XML processor is used to read XML documents and provide access to their content and structure. An XML processor is doing its work on behalf of another module, called the application program. A description of XML can be found in the document "Extensible Markup Language (XML) 1.0", W3C Recommendation 10 February 1998, retrievable from the Internet under http://www.w3.org/TR/REC-xml, which is incorporated by reference herein.

Today, there is a clear trend for personalization of services. Personalization of services is known on content level. An example of such content-personalized service is for example a personalized stock portfolio, often referred to as watchlist. Techniques that may be used to build such applications include CGI (Common Gateway Interface), JSP™ (JavaServer™ Pages of Sun Microsystems) and ASP (Active Server Pages).

Moreover, personalization is also known on presentation level. For example a user may choose for an application a preferred background color, a preferred font or the like. A way to personalize the presentation of a service is called XSLT (Extensible Stylesheet Language Transformation), which is a language for transforming XML documents into other XML documents. A transformation expressed in XSLT is called a stylesheet. XSLT is described in the document "XSL Transformations (XSLT) Version 1.0", W3C Recommendation 16 November 1999, retrievable from the Internet under http://www.w3.org/TR/xslt, which is herewith incorporated by reference herein.

In the development of service applications, especially in building and describing service applications, a separation of content, logic, and presentation is preferred. Services are often described as state diagrams.

In today's service applications, the behavior, i.e., the logic of an service, is often encapsulated in a number of software components and scripts. An adaptation on the fly of these software modules is technically not feasible and therefore, personalization of the behavior of an application requires the static introduction of new customized software modules.

### Summary of the Invention

It is therefore an object of the present invention to provide a method of performing a computer-controlled service that allows personalization of its behavior.

This object is achieved by a method of performing a computer-controlled service which includes providing in the form of a markup language document a service comprising service content, service presentation and service behavior. Before the document is executed by a markup language processor, at least one user parameter is determined from a user profile, a user input and/or current network characteristics. Then the service behavior is adapted based on the user parameter by transforming the markup language document using a behavior stylesheet. After transformation, the markup language document is rendered.

The invention has the advantage that personalization of a service does not require complex re-programming. Furthermore, it allows a completely dynamic personalization of the service behavior at the server or client side. Another advantage is that the user himself is able to adapt the behavior of a service.

The invention can also be combined to advantage with traditional stylesheets that adapt the presentation of a service.

### Brief Description of the Drawings

A preferred embodiment of the present invention will now be described with reference to the accompanying drawings in which
Figure 1 shows schematically how a service is adapted,
Figure 2 shows in more detail the personalization of a service,
Figure 3 shows the network environment in which the service is provided and
Figure 4 shows an example of the dialog sequence of a personalized service.

### Detailed Description of the Invention

A basic idea of the invention is to use a stylesheeting language to adapt according to a user parameter the behavior, i.e. the logic, of a service.

The service according to the invention is provided in the form of at least one document written in a formal description language referred to as a markup language. This document defines in an explicit way the behavior of the service like dialogs, session and events. Furthermore the document also contains the content and defines the presentation of the service.

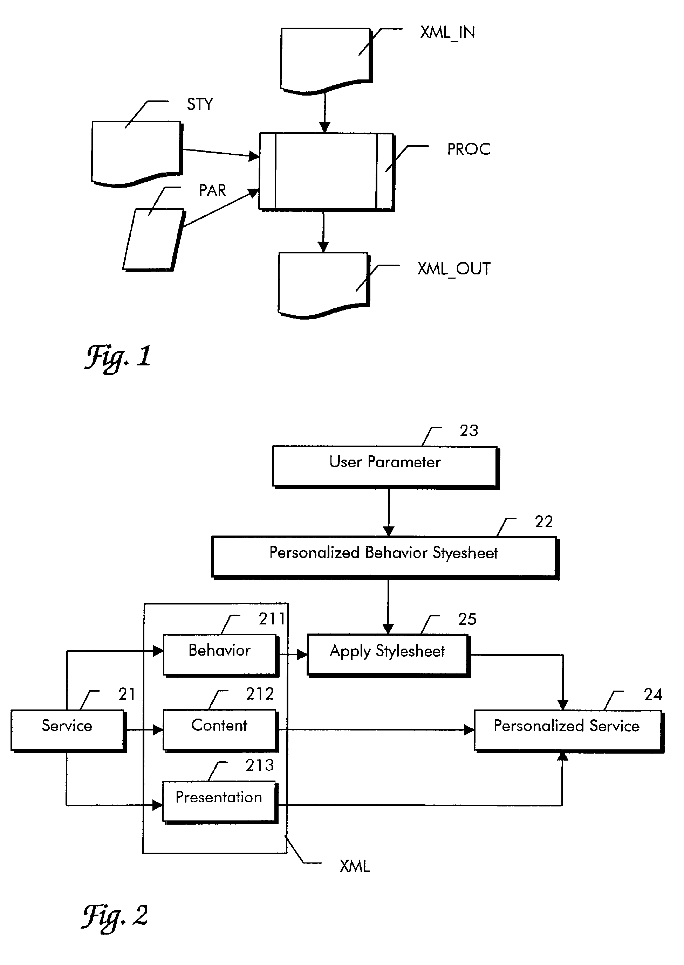

Figure 1 demonstrates schematically how the service is adapted. The service is provided in the form of an XML document XML_IN stored in a server. If a user from a remote terminal requests the document over the Internet, the server first determines at least one user parameter PAR. Then the server applies a stylesheet STY which is written in XSLT and serves to personalize the XML document XML_IN. This is done by processing with a stylesheet processor called XML processor PROC the stylesheet STY and the XML document XML_IN also taking into account the user parameter PAR. The XML processor produces from theses inputs a personalized XML document XML_OUT which is then transferred to the user and processed by a browser at the user terminal.

The user parameter PAR may either been stored in a user profile at the server side or may be transmitted to the server together with the user request. Any user parameter that is to be taken into account has previously been declared in the stylesheet and the stylesheet expects the declared parameters as input or uses default values instead.

Figure 2 shows the personalization of a service in more detail. The service 21 contains in logical separation behavior 211, content 212 and presentation 213. At least the behavior 211 of the service 21 is defined by an XML document. When the service is requested, at least one user parameter 23 is determined from either a user profile or from the user request. The parameter 23 is entered into a behavior stylesheet thus resulting in a personalized behavior stylesheet 22. Then the personalized behavior stylesheet 22 is applied in step 25 to the XML document defining the behavior 211 of the service 21. This way, a personalized service 24 is achieved.

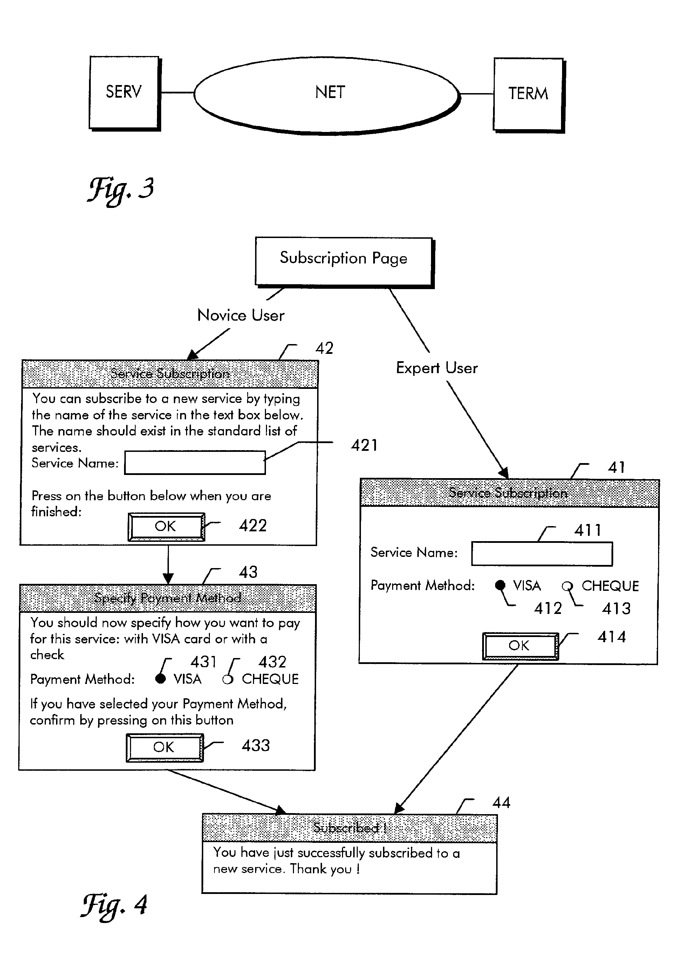

The network environment in which the service is provided is shown in Figure 3. From a terminal TERM, a user requests the service. The request is transmitted over a network NET, e.g., over the Internet, to a server SERV which stores the XML document describing the requested service. The server SERV personalizes the XML document as described above and transfers the personalized XML document to the user's terminal TERM which then processes the document with a markup language processor referred to as browser to perform the service. Alternatively, personalization of the XML document can also be done in the terminal TERM of the user.

The following simple example shows how the transformation of the XML document is carried out. Figure 4 shows the dialog sequence of the service in this example. In the example, the service is a subscription service which serves to subscribe a user on request to another new service, like for example the subscription for a daily newspaper. We thus assume a user wants to subscribe to such kind of new service. An XML document that provides to the user a dialog where he can enter the newspaper name for example and the way of payment he wishes, is stored on the remote server. The XML document contains the following code written in XML:

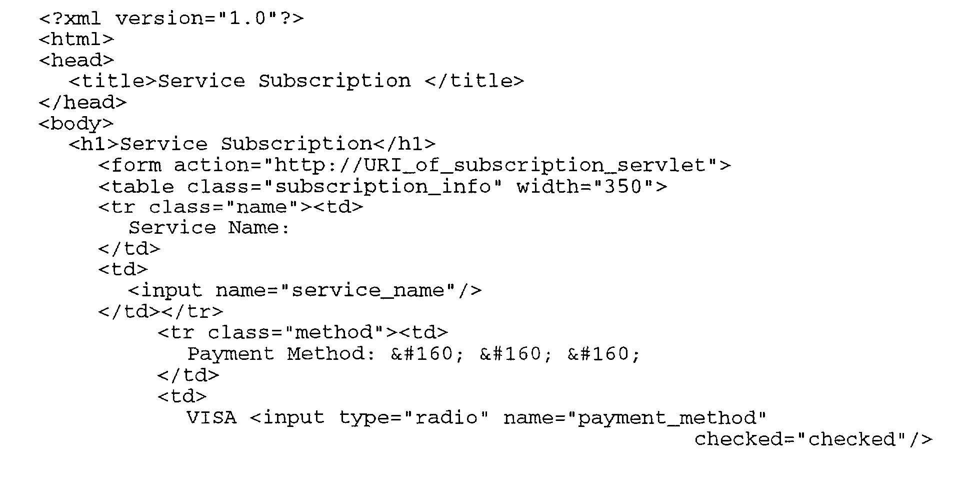

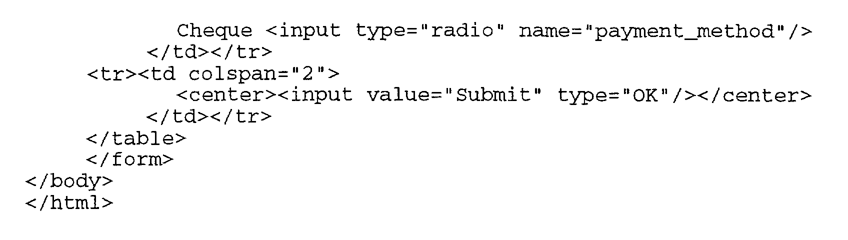

This code if executed by a web browser in a user's terminal will display dialog window 41 as shown in figure 4. The dialog window has an free text input field 41 1 for entering the service name, check boxes 412, 413 for the payment method with either credit card or cheque, and an OK button 414 to confirm the choice.

After pressing okay button 414, the entered data are transmitted to the server and dialog window 44 is displayed on the screen of the user, telling him that the subscription service has terminated successfully.

Now, this dialog window is intended for an expert user who is well aware of what he is expected to do and to enter in this menu. An novice user may have difficulties with this menu and might appreciate a more elaborate menu. Therefore, the subscription service can be adapted to a novice user. For this purpose, the remote server also stores an stylesheet for adapting the behavior of the subscription service. The stylesheet is written in XSLT and contains the following lines of code:

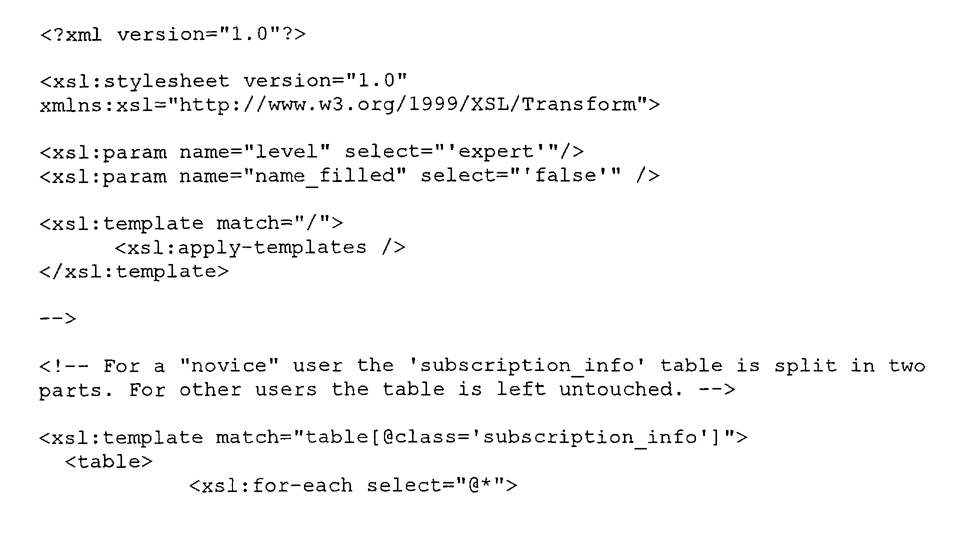

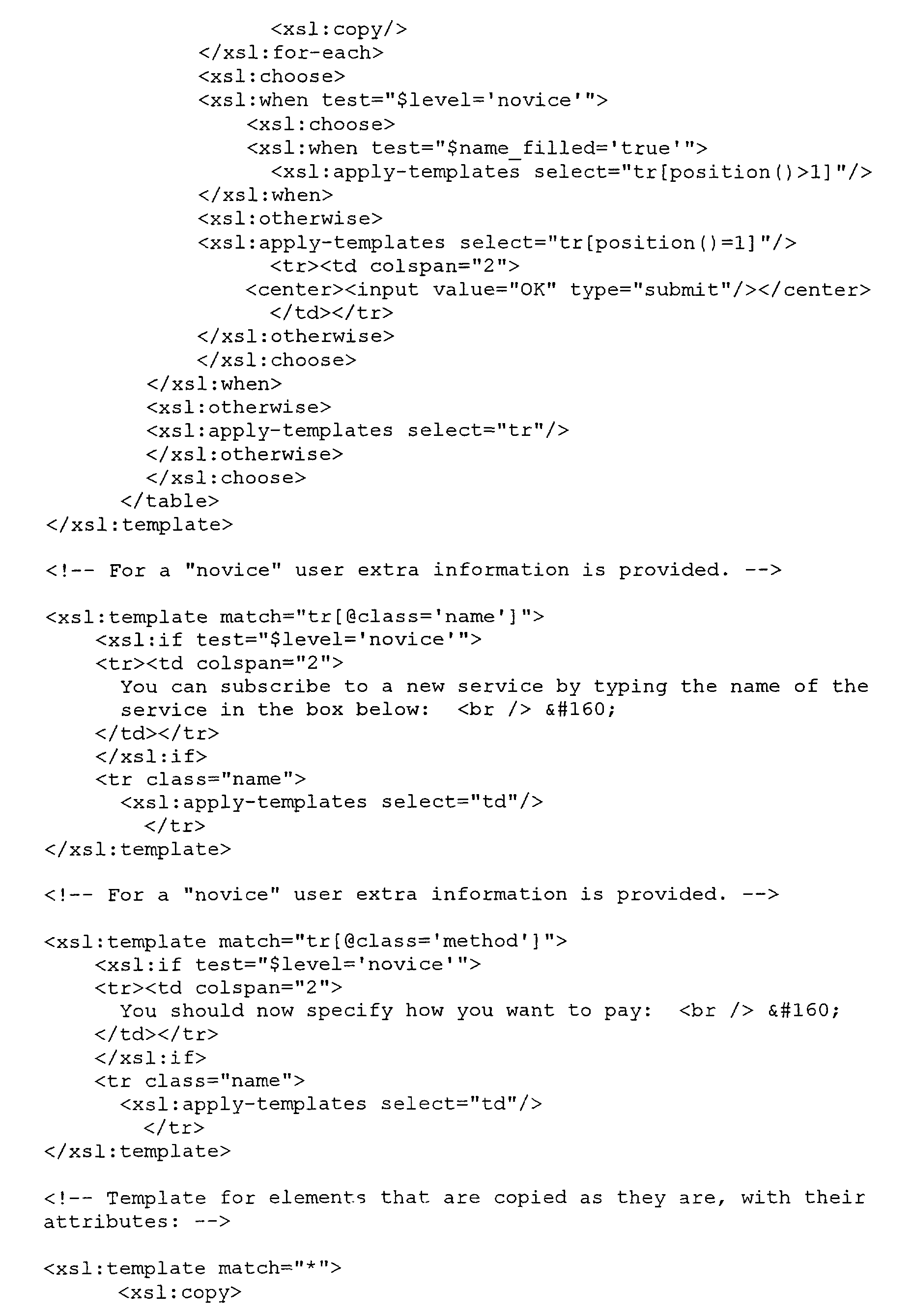

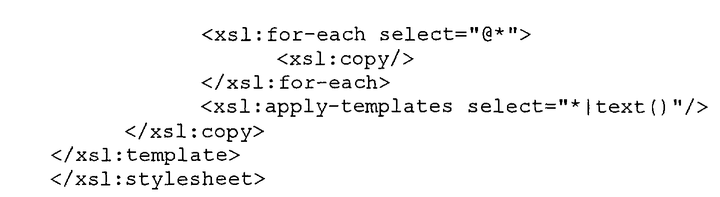

This stylesheet is executed by an XSLT processor and thereby transforms the XML document. The stylesheet accepts the parameter "level" which can be specified by the user directly or in a user profile. The value that is allowed for the parameter "level" is either "expert" or "novice". If no value for the parameter is specified by the user, the stylesheet will not do anything and the XML document remains unchanged. Thus if the user requests the subscription service without specifying the parameter "level", the dialog window 41 as described above appears. therefore, in this example, the value "expert" is the default value.

If the user has specified the value "novice", then the stylesheet if run by a XLS processor transforms the XML document into two new XML documents, each representing one page or dialog window. The first of the two new documents contains the following lines of code:

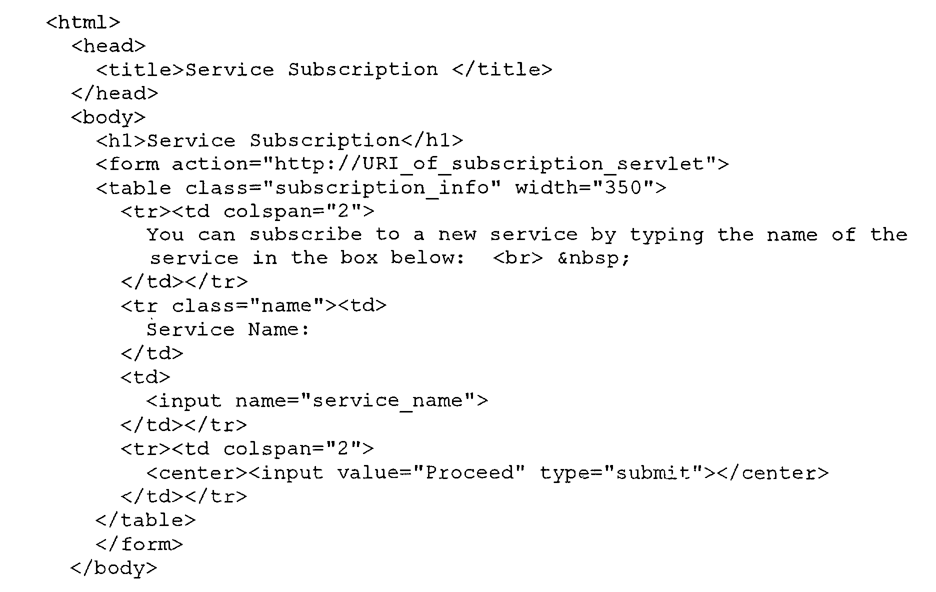

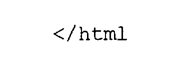

This document is transmitted to the user in a first transmission step and executed by the browser on his terminal. It displays dialog window 42 on the screen of the user's terminal. Dialog window 42 contains the explanation " You can subscribe to a new service by typing the name of the service in the text box below. The name should exist in the standard list of services.", explaining to the user what he can do on this page. It further contains free text input field 421 into which the user is expected to enter the name of the service he wants to subscribe. After entering, he needs to press okay button 422 to confirm his choice. This is also explained to him by the explanation "Press on the button below when you are finished".

After pressing okay button 421, dialog window 42 disappears and the entered service name is transmitted from the terminal to the server. The server then transmits in a second transmission step the second of the two new XML documents to the terminal. The second document contains the following lines of code:

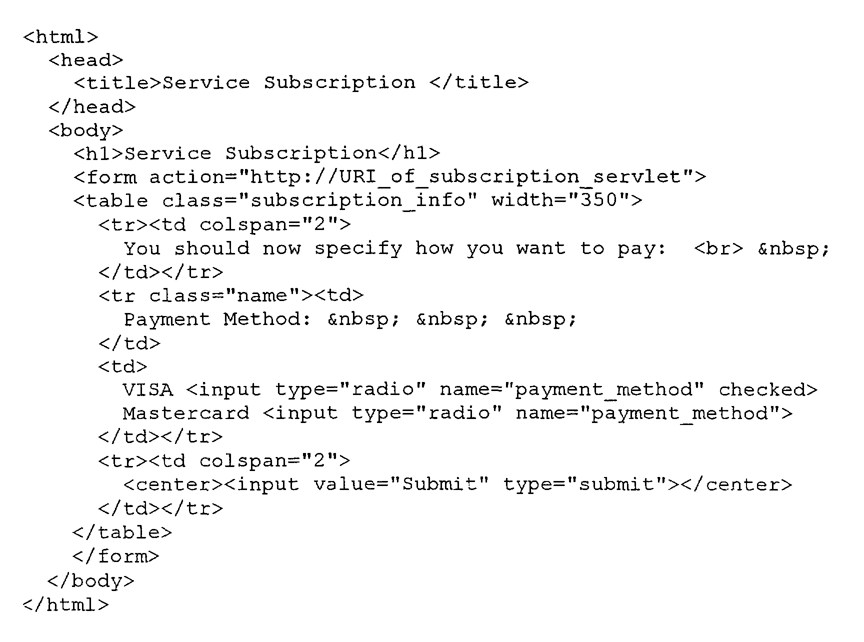

This document is also executed by the web browser on the user's terminal and displays dialog window 43 on his screen. Dialog window 42 contains the check boxes 431 and 432 for the payment method to be chosen by the user. It contains also the explanation "You should now specify how you want to pay for this service: with VISA card or with a check" explaining to the user what he is expected to do first and the explanation "If you have selected your Payment Method, confirm by pressing on this button", telling him how to proceed. After the user has confirmed his choice by pressing okay button 443, the entered choice is transmitted to the server and dialog window 44 is displayed on the user's screen. Thus the subscription service ends the same way as for an expert user.

It shall be noted that for the sake of simplicity, the above example is very much simplified and contains only few widgets. However, it is sufficient to demonstrate the power and versatility of the inventions and those having ordinary skill in the art would be able with the above explanation to apply the method according to the invention to any real application.

In the above example, the user parameter is to be specified by the user himself. However, the user parameter can also be stored in a user profile at the server side or can be determined from any other sources. Furthermore, the invention is not limited to only one parameter. Other parameters that may be useful to personalize a service include for example sex and age of the user, the user's previous service usage often referred to as history, but also network characteristics such as the latency of the network.

If for example the network is very slow due to network overload, it might be helpful to limit a service to only its essential features and omit additional optional features which would be nice to have but which would slow down the whole service if the throughput in the network is too low.

In another example, if the user is a novice, then the service is extended with help functions. On the other hand, if the user is an well known user, he will automatically be forwarded to a certain state of the service without going through the whole state diagram which he otherwise would have to fill in every day exactly the same.

The method of personalizing the logic of a service using stylesheeting allows depending on the specified parameters to filter out specific sessions, change dialog sequence, replace dialogs, introduce new event types and many, many more. The invention thus uses the mechanism of stylesheeting to automatically generate a personalized state diagram, i.e. a personalized way of going through a certain service.

While the invention has been described with reference to XHML (Extensible HyperText Markup Language), it is not restricted to this markup language. However, the invention can also be applied to services that are expressed in any other markup language like CPL (Call Processing Language), VoiceXML (Voice Extensible Markup Language), or WML (Wireless Markup Language).

CPL is under design and development by the IP Telephony (IPTEL) working group of the Internet Engineering Task Force. "The Call Processing Language" (CPL) is a language that can be used to describe and control Internet telephony services.

VoiceXML is designed to making Internet content and information accessible via voice and phone. VoiceXML is a Web-based markup language for representing human-computer dialogs, just like HTML. But while HTML assumes a graphical web browser, with display, keyboard, and mouse, VoiceXML assumes a voice browser with audio output (computer-synthesized and/or recorded), and audio input (voice and/or keypad tones).

WML (Wireless Markup Language) is a markup language based on XML, and is intended for use in specifying content and user interface for narrowband devices with only small displays, including cellular phones and pagers.

Other markup languages, especially those derived from XML or SGML, may also be envisaged for providing a service in accordance with the invention. Those other markup languages include for example XForms and SMIL (Synchronized Multimedia Integration Language).

Furthermore, the invention is also not restricted to the use of XSLT but any other stylesheeting language, i.e. any other formal description language appropriate to define a transformation on the markup language document, could be envisaged for the implementation of the invention.

The processing of the stylesheet which results in personalizing the service can be implemented in either the server that provides the service, the terminal of the user or any other device in the network like remote access servers, residential gateways or proxy servers over one or more of which the user's terminal is connected to the network.

The device that performs the adaptation by executing the stylesheet on the document implementing the service therefore has the following design. It includes a computer having a processing unit, a main memory, a permanent storage and at least one interface to the network. The permanent storage stores a computer program called XSL processor that is adapted to execute the stylesheet if loaded into the main memory and run on the processing unit. The device further comprises a means for determining the at least one user parameter. This means may be another software module that if run on the processing unit determines the parameter from either the user input, a user profile stored in the permanent storage, or the network characteristics. While it is preferred to implement this means in software because of the greater flexibility and easier updating, it would be also possible to have this means implemented in hardware, like a measurement device in the interface for determining network characteristics, an additional input port for a independent control parameter signal, or any other hardware means like jumpers, switches, keys, keyboards or the like that may serve to enter a user or state parameter to be taken into account by the XSL processor.

The inventions concerns personalization of the service behavior that is defined by a markup language document. Nevertheless, the markup language document can also describe the presentation and content of the service. Therefore, the invention can be combined to advantage with traditional stylesheets. This means that beside the behavior also presentation and/or content of the service may be customized according to user parameter by applying a stylesheet. This can be a separate stylesheet for adapting the content and/or presentation or can be a combined stylesheet for adaptation of behavior and content and/or presentation.

## Claims

1. A method of performing a computer-controlled service (21), comprising the steps of
- providing in the form of a markup language document (XML_IN; XML) a service comprising service content (212), service presentation (213) and service behavior (211);
- determining at least one parameter (PAR; 23); and
- based on the parameter (PAR; 23), adapting the service behavior (211) by transforming the markup language document (XML_IN; XML) using a behavior stylesheet (STY; 22).

2. A method according to claim 1, comprising the step of processing the transformed markup language document (XML_OUT) by a markup language processor.

3. A method according to claim 1, wherein the parameter (PAR; 23) is determined from one or more of the following sources: a user profile, a user terminal, or current network characteristics.

4. A method according to claim 1, wherein the step of adapting the service behavior (211) includes one or more of the following actions: adding or filtering out parts of the service session, changing the service dialog sequence, replacing dialogs by other new dialogs, or introducing new event types for the service.

5. A method according to claim 1, wherein the markup language document (XML_IN; XML) is written in either of the following markup languages: Hypertext Markup Language or a language derived from the Extensible Markup Language or the Standard Generalized Markup Language like the Call Processing Language, the Voice Extensible Markup Language, the Wireless Markup Language, the Extensible HyperText Markup Language, XForms, or the Synchronized Multimedia Integration Language.

6. A method according to claim 1, further comprising the step of adapting the service presentation (213) using a stylesheet.

7. A method according to claim 1, further comprising the step of adapting the service content (212) using a stylesheet.

8. A behavior stylesheet (STY; 22) for adapting the behavior (211) of a service (21) defined in a markup language document (XML_IN; XML) by transforming the markup language document, comprising a declaration of at least one parameter (PAR; 23) and control commands for transforming the markup language document (XML_IN; XML) using the parameter (PAR; 23), wherein the stylesheet (STY, 22) is written in a formal description language and performs the transformation when executed by a computer program called stylesheet processor (PROC).

9. A behavior stylesheet according to claim 8, wherein the formal description language is the Extensible Stylesheet Language Transformation.

10. A device for adapting the behavior (211) of a service (21) defined in a markup language document (XML_IN; XML) by transforming the markup language document using a behavior stylesheet (STY; 22), the device comprising a computer comprising a main memory, a processing unit and a permanent storage, the permanent storage storing the behavior stylesheet (STY; 22) and a computer program called stylesheet processor (PROC) adapted to execute the behavior stylesheet (STY; 22) if loaded into the main memory and run on the processing unit, the device further comprising a means for determining the at least one parameter (PAR; 23) to be taken into account during execution of the behavior stylesheet (STY; 22).

11. A device according to claim 10, further comprising an interface connectable to a network for downloading the markup language document (XML_IN; XML) and the behavior stylesheet (STY; 22) from a remote server prior to adapting the service behavior.
